# EUROPEAN PATENT APPLICATION

(11) **EP 4 779 263 A1**
(43) Date of publication of application: **22.07.2026**
(21) Application number: 24865290.1
(22) Date of filing: 30.08.2024
(51) Int. Cl.: G01C 15/00, G01C 15/06

(54) **SURVEYING SYSTEM, SURVEYING METHOD, AND SURVEYING PROGRAM**

(30) Priority: 13.09.2023 JP 2023148082
(71) Applicant: Topcon Corporation, Tokyo 174-8580 (JP)
(72) Inventor: NISHITA, Nobuyuki, Tokyo 174-8580 (JP); SHIGETA, Masahiro, Tokyo 174-8580 (JP)
(74) Representative: Louis Pöhlau Lohrentz
(86) International application number: PCT/JP2024/031267
(87) International publication number: WO 2025/057788

(57) **Abstract**

A surveying system (1) comprises a target device (3) having a pole (14) and a target (15) of which distance from a lower end of the pole is known and a surveying instrument (2) capable of measuring the target, wherein the lower end of the pole is aligned with a predetermined measurement point (13), the surveying instrument is configured to calculate an O-M vector connecting a machine center of the surveying instrument and a measurement position of the target, and a M-P vector connecting the measurement position and the measurement point, to calculate an angle φ between a plane orthogonal to the M-P vector and passing through the measurement position, and the O-M vector, to calculate a measurement error between the measurement position and an optical center of the target based on the angle φ, to correct the measurement position based on the measurement error, and to calculate three-dimensional coordinates of the measurement point based on the corrected measurement position.

## Description

### TECHNICAL FIELD

The present invention relates to a surveying system, a surveying method, and a surveying program that are capable of measuring three-dimensional coordinates of a desired measurement point.

### BACKGROUND ART

When surveying a desired measurement point, the survey is generally carried out using a retroreflective prism, etc. In prism surveying using a prism, for example, a pole with a prism mounted at a known position is installed at a measurement point, and the prism is leveled so that it is positioned vertically above the measurement point using a bubble tube or the like, and then the prism is measured by a surveying instrument such as a total station.

However, when prism measurement is performed at a plurality of measurement points, leveling must be performed each time the measurement point is moved, which takes time for measurement and reduces work efficiency.

Further, when the measurement point is a corner of a room, the pole cannot be leveled vertically. In a case where the prism cannot be installed vertically above the measurement point, it is difficult to perform a survey using a prism.

Further, there is also a surveying instrument that is equipped with a tilt angle detector on the pole, which detects a tilt angle of the pole and corrects a measurement value based on the detected tilt angle, making it possible to measure the corners of a room, etc. However, the surveying instrument has a risk of producing errors in the measurement results depending on a direction of a tilt.

### PRIOR ART REFERENCES

### PATENT DOCUMENT

Patent Document 1
Japanese Patent Publication No. 6721479

### SUMMARY OF THE INVENTION

### PROBLEM TO BE SOLVED BY THE INVENTION

The present invention provides a surveying system, a surveying method, and a surveying program that improve a measurement accuracy of measurement points.

### MEANS FOR SOLVING THE PROBLEM

The present invention relates to a surveying system comprising a target device having a pole and a target of which distance from a lower end of the pole is known and a surveying instrument capable of measuring the target, wherein the lower end of the pole is aligned with a predetermined measurement point, the surveying instrument is configured to calculate an O-M vector connecting a machine center of the surveying instrument and a measurement position of the target, and a M-P vector connecting the measurement position and the measurement point, to calculate an angle φ between a plane orthogonal to the M-P vector and passing through the measurement position, and the O-M vector, to calculate a measurement error between the measurement position and an optical center of the target based on the angle φ, to correct the measurement position based on the measurement error, and to calculate three-dimensional coordinates of the measurement point based on the corrected measurement position.

Further, the present invention relates to the surveying system, wherein the target device is configured such that the pole is swung while a lower end of the pole is aligned with a predetermined measurement point, the surveying instrument is configured to measure the target at least at three points, to calculate three-dimensional coordinates of a virtual measurement point based on the measurement position of each target, and to calculate the M-P vector based on the measurement position of the target and the virtual measurement point.

Further, the present invention relates to the surveying system, wherein the target device further has a tilt sensor, and the surveying instrument is configured to calculate the M-P vector based on the measurement position, and an attitude of the pole detected by the tilt sensor.

Further, the present invention relates to the surveying system, wherein the surveying instrument is configured to calculate a degree of coincidence between the measurement points and the virtual measurement points as an accuracy, and when the accuracy satisfies a preset threshold, to correct the measurement positions of each target, to recalculate the virtual measurement points as measurement points based on the corrected measurement positions, and to perform a measurement completion operation.

Further, the present invention relates to the surveying system, wherein the surveying instrument is configured to correct all measurement positions of the target each time the virtual measurement point is calculated, to recalculate the virtual measurement point based on the corrected measurement positions, to calculate the degree of coincidence between the measurement points and the virtual measurement point as accuracy, and when the accuracy satisfies a preset threshold, to regard the virtual measurement point as a measurement point and to perform a measurement completion operation.

Further, the present invention relates to the surveying system, wherein the surveying instrument is configured to calculate a center of a sphere that has a distance from a lower end of the pole to the target as a radius, and fits to each measurement position as the measurement point, to calculate a reference sphere normalized with the radius of the sphere as 1, to calculate an area of the smallest curved surface including all the point clouds on a surface of the reference sphere, and to calculate the accuracy based on a comparison between the curved surface and a preset reference curved surface.

Further, the present invention relates to the surveying system, wherein the surveying instrument further has a tracking function, and the surveying instrument is configured to measure a target while tracking the target.

Further, the present invention relates to the surveying system, wherein the surveying instrument is configured to sequentially calculate spheres that fit at least three measurement positions of the target consecutively measured each time the target is measured, and to judge whether the target device is installed at the measurement point based on whether a distance between centers of the spheres converges within a preset threshold range.

Further, the present invention relates to a surveying method comprising: a step of calculating an O-M vector connecting a machine center of a surveying instrument and a measurement position of a target provided at an upper end of a pole, and a M-P vector connecting the measurement position and a measurement point, while aligning a lower end of the pole with a predetermined measurement point, a step of calculating an angle φ between a plane orthogonal to the M-P vector and passing through the measurement position and the O-M vector, a step of calculating a measurement error between the measurement position and an optical center of the target based on the angle φ, a step of correcting the measurement position based on the measurement error, and a step of calculating three-dimensional coordinates of the measurement point based on the corrected measurement position.

Further, the present invention relates to the surveying method further comprising: a step of measuring the target at least at three points by swinging the pole while aligning the lower end of the pole with a predetermined measurement point, a step of calculating three-dimensional coordinates of a virtual measurement point based on measurement positions of each target, and a step of calculating the M-P vector based on the measurement positions of the target, and the virtual measurement point.

Further, the present invention relates to the surveying method further comprising: a step of receiving an attitude of the pole from a tilt sensor provided on the pole, and a step of calculating the M-P vector based on the received attitude of the pole.

Furthermore, the present invention relates to a surveying program that causes the surveying instrument to perform following processes: while a lower end of the pole is aligned with a predetermined measurement point, a process for calculating an O-M vector connecting a machine center of a surveying instrument and a measurement position of a target provided at an upper end of the pole, and a M-P vector connecting the measurement position and the measurement point, a process for calculating an angle φ between a plane orthogonal to the M-P vector and passing through the measurement position, and the O-M vector, a process for calculating a measurement error between the measurement position and an optical center of the target based on the angle φ, a process for correcting the measurement position based on the measurement error, and a process for calculating three-dimensional coordinates of the measurement point based on the corrected measurement position.

### EFFECTS OF THE INVENTION

According to the present invention, a surveying system comprises a target device having a pole and a target of which distance from a lower end of the pole is known and a surveying instrument capable of measuring the target, wherein the lower end of the pole is aligned with a predetermined measurement point, the surveying instrument is configured to calculate an O-M vector connecting a machine center of the surveying instrument and a measurement position of the target, and a M-P vector connecting the measurement position and the measurement point, to calculate an angle φ between a plane orthogonal to the M-P vector and passing through the measurement position, and the O-M vector, to calculate a measurement error between the measurement position and an optical center of the target based on the angle φ, to correct the measurement position based on the measurement error, and to calculate three-dimensional coordinates of the measurement point based on the corrected measurement position. As a result, even if a measurement error exists between the measurement position of the target measured by the surveying instrument and the optical center of the target, the measurement error can be corrected, and the measurement accuracy of the measurement point can be improved.

Further, according to the present invention, a surveying method comprises a step of calculating an O-M vector connecting a machine center of a surveying instrument and a measurement position of a target provided at an upper end of a pole, and a M-P vector connecting the measurement position and a measurement point, while aligning a lower end of the pole with a predetermined measurement point, a step of calculating an angle φ between a plane orthogonal to the M-P vector and passing through the measurement position and the O-M vector, a step of calculating a measurement error between the measurement position and an optical center of the target based on the angle φ, a step of correcting the measurement position based on the measurement error, and a step of calculating three-dimensional coordinates of the measurement point based on the corrected measurement position. As a result, even if a measurement error exists between the measurement position of the target measured by the surveying instrument and the optical center of the target, the measurement error can be corrected, and the measurement accuracy of the measurement point can be improved.

Furthermore, according to the present invention, a surveying program causes the surveying instrument to perform following processes: while a lower end of the pole is aligned with a predetermined measurement point, a process for calculating an O-M vector connecting a machine center of a surveying instrument and a measurement position of a target provided at an upper end of the pole, and a M-P vector connecting the measurement position and the measurement point, a process for calculating an angle φ between a plane orthogonal to the M-P vector and passing through the measurement position, and the O-M vector, a process for calculating a measurement error between the measurement position and an optical center of the target based on the angle φ, a process for correcting the measurement position based on the measurement error, and a process for calculating three-dimensional coordinates of the measurement point based on the corrected measurement position. As a result, even if a measurement error exists between the measurement position of the target measured by the surveying instrument and the optical center of the target, the measurement error can be corrected, and the measurement accuracy of the measurement point can be improved.

### BRIEF DESCRIPTION OF DRAWINGS

[FIG.1]

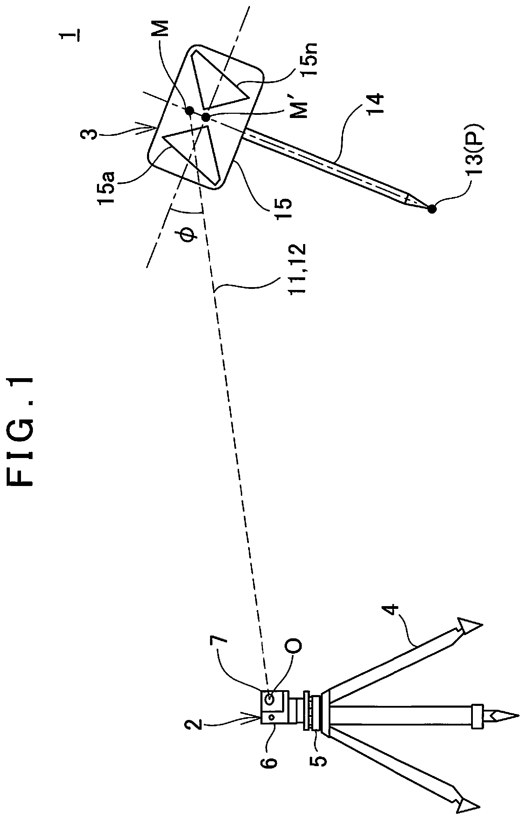

   FIG.1 is a schematic diagram showing a surveying system according to a first embodiment.
[FIG.2]

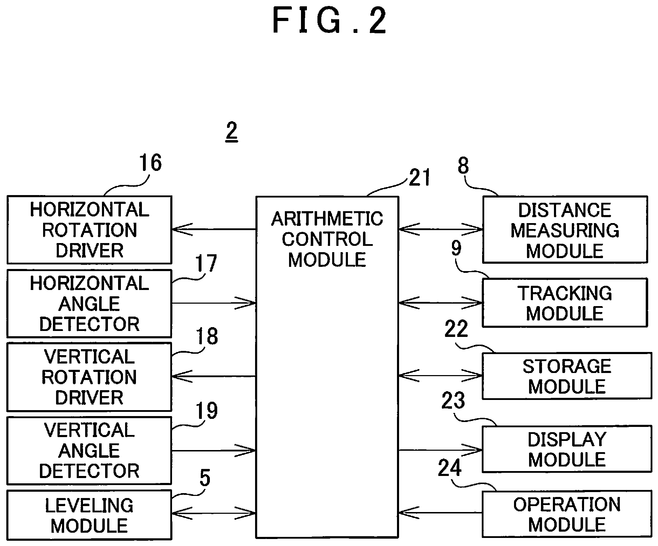

   FIG.2 is a schematic block diagram showing a surveying instrument according to the first embodiment.
[FIG.3]

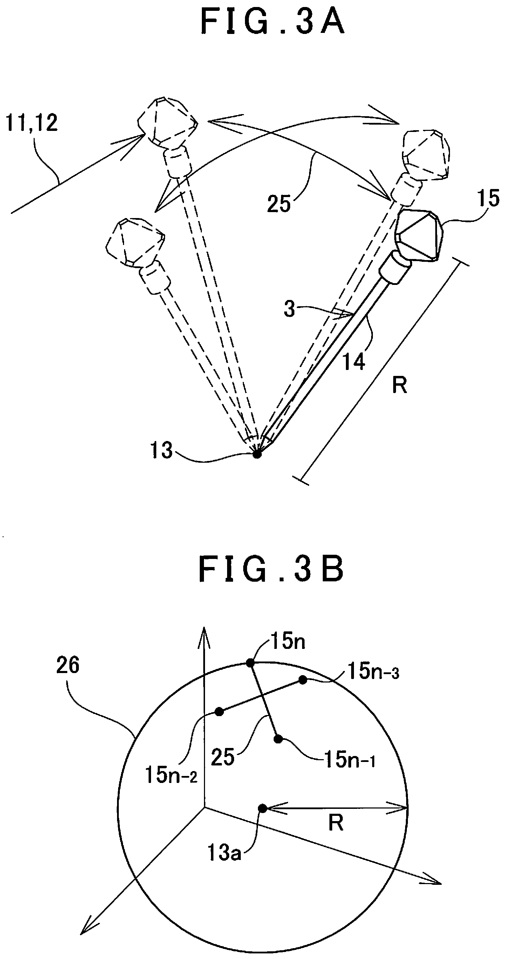

   FIG.3A is an explanatory diagram showing a swing of a target device, and FIG.3B is an explanatory diagram showing a sphere to be fitted to measurement results.
[FIG.4]

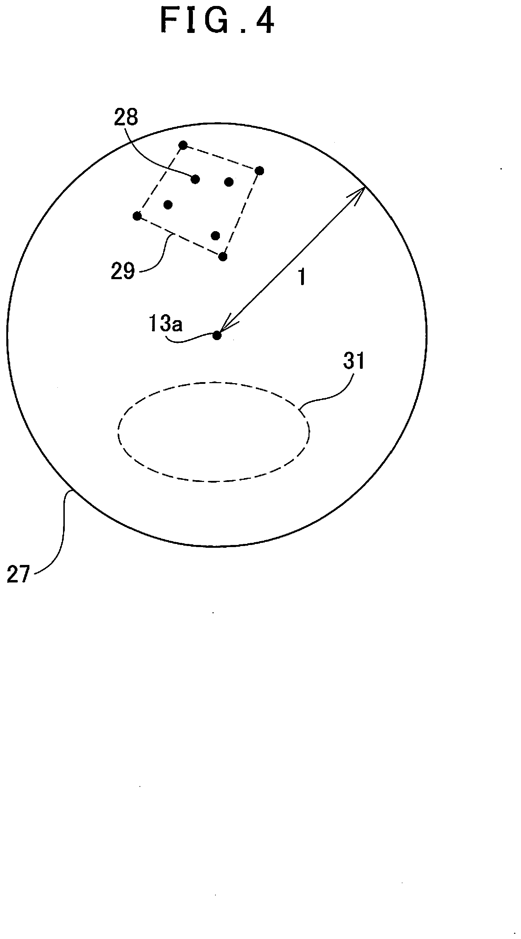

   FIG.4 is an explanatory diagram for explaining how to obtain an accuracy of measurement points according to the first embodiment.
[FIG.5]

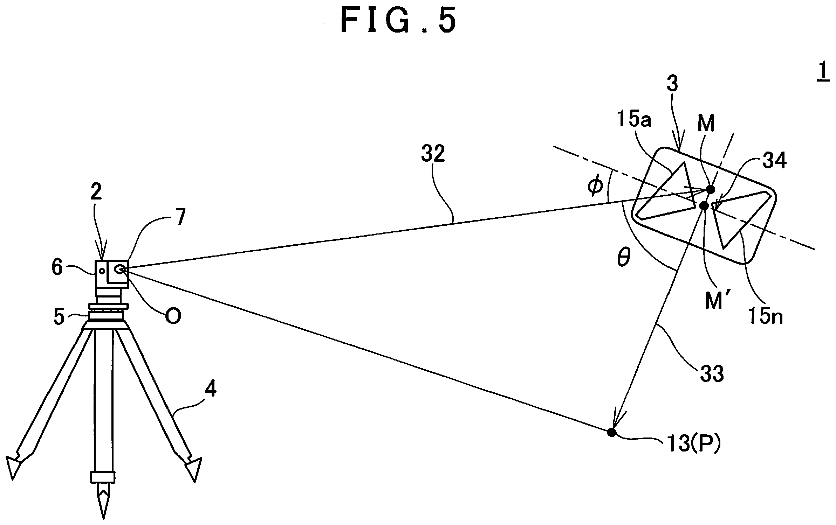

   FIG.5 is an explanatory diagram for explaining a measurement position and a position of an optical center according to the first embodiment.
[FIG.6]

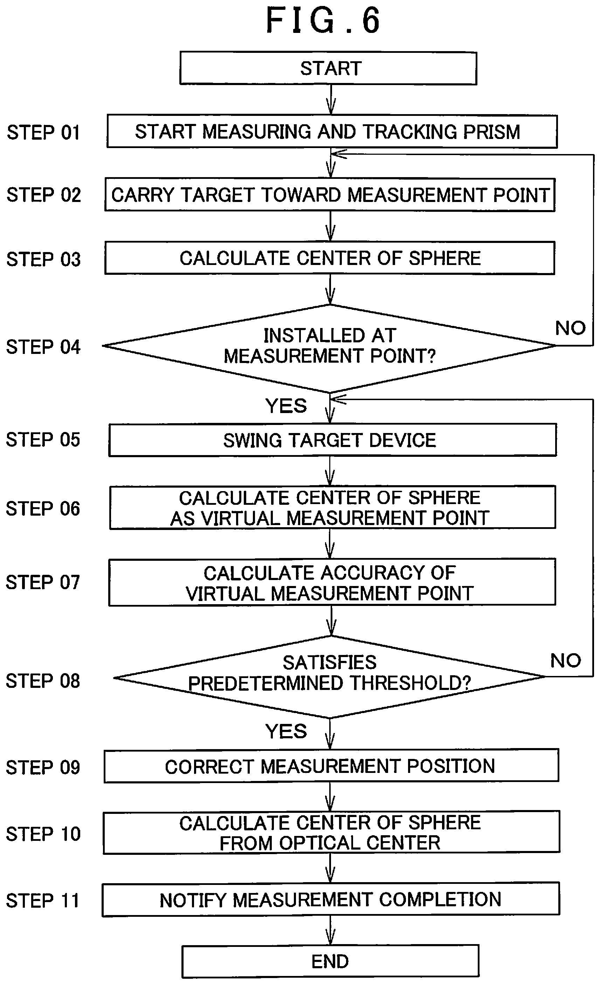

   FIG.6 is a flowchart for explaining a measurement of a surveying system according to a first embodiment.
[FIG.7]

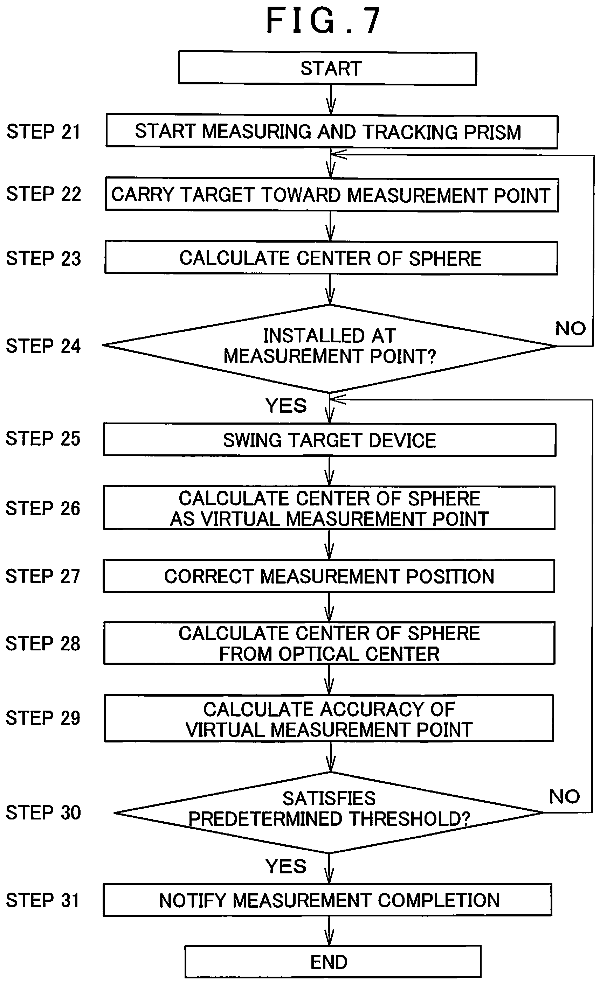

   FIG.7 is a flowchart for explaining a measurement of a surveying system according to a second embodiment.
[FIG.8]

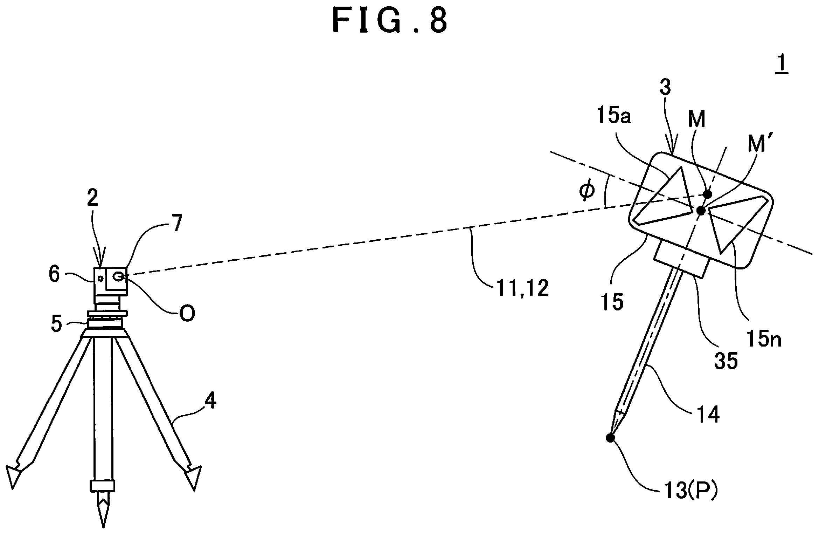

   FIG.8 is a schematic diagram showing a surveying system according to a third embodiment.

### MODE(S) FOR CARRYING OUT THE INVENTION

A description will be given below on embodiments of the present invention by referring to the attached drawings.

First, in FIG.1, a description will be given on a surveying system according to a first embodiment of the present invention.

A surveying system 1 includes a surveying instrument 2 and a target device 3. The surveying instrument 2 is, for example, a total station with a tracking function, and is composed of a leveling module 5 mounted on a tripod 4, and a surveying instrument main body 6 mounted on the leveling module 5 and capable of horizontal rotation with respect to the leveling module 5. The surveying instrument 2 is installed at a reference point having known three-dimensional coordinates.

The leveling module 5 has a sensor (not shown) for detecting a tilt of the leveling module 5 and a motor (not shown) for driving a leveling screw that levels the leveling module 5, and is configured to automatically level the leveling module 5 based on a detection result of the sensor.

The surveying instrument main body 6 has a telescope unit 7 capable of rotating vertically with respect to the surveying instrument main body 6. Further, the telescope unit 7 incorporates a distance measuring module 8 (to be described later) and a tracking module 9 (to be described later). The distance measuring module 8 is configured to emit a distance measuring light 11 on a distance measuring optical axis and to measure a distance to an object based on a reflected distance measuring light reflected by the object. Further, the tracking module 9 is configured to emit a tracking light 12 on a tracking optical axis (on the distance measuring optical axis) that is coaxial with the distance measuring light 11 and to perform tracking based on a reflected tracking light reflected by the object.

The target device 3 has a rod-shaped pole 14 installed at a measurement point 13 and a prism 15 as a target (object) provided at an upper end of the pole 14. A lower end of the pole 14 tapers conically downward and forms a pointed tip. The prism 15 is, for example, a 360° full-circumference prism combining a plurality of retroreflective prisms 15a to 15n. An optical center of the prism 15 is located on an axis of the pole 14, and a distance from the lower end of the pole 14 to the optical center of the prism 15 is known. It is to be noted that, in FIG.1, a cross section of the prism 15 is shown as the prism 15.

Next, in FIG.2, a description will be given on a configuration of the surveying instrument 2.

The surveying instrument 2 has a horizontal rotation driver 16 for rotating the surveying instrument main body 6 with respect to the leveling module 5, a horizontal angle detector 17 for detecting a rotation angle (horizontal angle) of the surveying instrument main body 6, a vertical rotation driver 18 for rotating the telescope unit 7 with respect to the surveying instrument main body 6, and a vertical angle detector 19 for detecting a rotation angle (vertical angle) of the telescope unit 7. Further, the surveying instrument 2 has an arithmetic control module 21, a storage module 22, a display module 23, and an operation module 24.

The horizontal rotation driver 16 and the vertical rotation driver 18 constitute a drive unit of the surveying instrument 2, and the horizontal angle detector 17 and the vertical angle detector 19 constitute an angle measurement unit for detecting an irradiation direction of the distance measuring light 11.

As the arithmetic control module 21, a CPU specialized for the present embodiment, or a general-purpose CPU, an embedded CPU, a microprocessor, etc is used. Further, as the storage module 22, a semiconductor storage memory such as RAM, ROM, Flash ROM, or DRAM, a magnetic storage memory such as HDD, or an optical storage memory such as CD-ROM is used.

The storage module 22 stores various programs such as a sequence program for controlling a measurement operation, a distance measurement program for calculating a distance by a distance measurement operation, an angle measurement program for calculating an irradiation direction (angle) of the distance measuring light 11 and the tracking light 12 based on detection results of the horizontal angle detector 17 and the vertical angle detector 19, a measurement program for calculating three-dimensional coordinates of the prism 15 based on a distance and an angle, a leveling program for making the leveling module 5 perform leveling, a tracking program for making the tracking module 9 track the prism 15, a calculation program for calculating three-dimensional coordinates of a virtual measurement point based on measurement results (distance measurement results and angle measurement results) of at least three different points on the prism 15, an accuracy calculation program for calculating a degree of coincidence between the measurement point 13 and the virtual measurement point as accuracy, a judgment program for determining whether the calculated accuracy satisfies a preset threshold, a correction program for correcting calculation results (three-dimensional coordinates) of the virtual measurement point, a calculation program for calculating three-dimensional coordinates of the measurement point 13 based on the corrected virtual measurement point, a notification program for notifying of measurement completion, a drive control program for controlling the horizontal rotation driver 16, the vertical rotation driver 18, etc., and a display program for displaying measurement results, etc. on the display module 23.

Further, the storage module 22 stores data such as measurement data (distance measurement data and angle measurement data) obtained when measuring the prism 15, and three-dimensional coordinate data of the measurement point 13 calculated based on the measurement data. Further, the storage module 22 stores thresholds for determining an accuracy of a position of a center of a sphere with respect to the measurement point 13, as will be described later, and approximate formulas for correction. The accuracy indicates how closely a position of a virtual measurement point 13a determined by calculation coincides with the measurement point 13, i.e., a degree of coincidence between the measurement point 13 and the virtual measurement point 13a. The arithmetic control module 21 deploys and executes various programs stored in the storage module 22, and performs various processes.

Next, a description will be given on a measurement using the surveying system 1 by referring to FIGS. 3A, 3B, 4, 5 and a flowchart of FIG.6.

(Step 01) First, the arithmetic control module 21 causes the telescope unit 7 to collimate the prism 15 and to start measuring and tracking the prism 15.

The surveying instrument 2 measures the prism 15 (measures distance and angle) at a predetermined interval, for example, 20 Hz, while tracking the prism 15. Therefore, three-dimensional coordinates (point cloud) of a plurality of spots along a trajectory 25 of the prism 15 are obtained. A measurement interval is not limited to 20 Hz, and an appropriate interval such as 10 Hz or 30 Hz can be selected.

In the measurement of the prism 15, there may be a mismatch between a timing of measuring the distance and a timing of measuring an angle for the prism 15. In this case, a measurement accuracy of the prism 15 can be improved by discarding measurement results with the mismatched timing.

(Step 02) With the surveying instrument 2 tracking the prism 15, an operator carries the target device 3 toward the predetermined measurement point 13.

(Step 03) A distance (offset length R) from the lower end of the pole 14 to the optical center of the prism 15 is known. The arithmetic control module 21 calculates a sphere 26 with a radius equal to the offset length R and fits the sphere 26 to a point cloud of at least three consecutive points set in advance. As shown in FIG.3B, when fitting the sphere 26 based on four points, for example, the sphere 26 is fitted to four points: the prism 15n measured in the nth measurement, the prism 15n-1 measured in the n-1st measurement, the prism 15n-2 measured in the n-2nd measurement, and the prism 15n-3 measured in the n-3rd measurement. That is, the sphere 26 is sequentially fitted to the four consecutively measured points.

Alternatively, the arithmetic control module 21 calculates the sphere 26 that has the offset length R as its radius and passes through the three-dimensional coordinates of the measured four points of the prisms 15n, 15n-1, 15n-2, and 15n-3.

Further, every time the prism 15 is measured, the arithmetic control module 21 sequentially calculates the sphere 26 that fits to the four points and calculates a center of the sphere 26.

(Step 04) The arithmetic control module 21 judges whether the sphere 26 that fits to the four points exists, and whether a distance between centers of the spheres 26 that are sequentially calculated converges to a preset threshold or less.

When the sphere 26 that fits to the four points cannot be calculated, or when the centers of the sequentially calculated spheres 26 do not converge to or below the threshold, the arithmetic control module 21 judges that the target device 3 is moving and discards measurement results. After discarding the measurement results, the calculation of the sphere 26 and the calculation of the center of the sphere 26 are continued.

Further, when the sphere 26 that fits to the four points exists and the center of the sphere 26 converges to a preset threshold or less, the arithmetic control module 21 judges that the target device 3 is installed at the measurement point 13, i.e., the lower end of the pole 14 coincides with the measurement point 13.

(Step 05) After installing the target device 3, the operator swings the target device 3 in a predetermined direction at a predetermined angle while aligning the lower end of the pole 14 with the measurement point 13. For example, as shown in FIG.3A, the operator swings the target device 3 in a cross shape at ± 15°.

The swing of the target device 3 is not limited to a cross shape. For example, the target device 3 may be tilted so that the prism 15 describes a circle, or so that the prism 15 describes a figure eight. Further, the target device 3 may be tilted so that the prism 15 describes a triangular trajectory and passes through one point within the triangle. That is, it is sufficient that the swing direction has a two-dimensional spread. Further, a tilt angle of the target device 3 is not limited to ± 15° , but may be greater than or less than 15°.

From the time when the arithmetic control module 21 judges that the target device 3 is installed at the measurement point 13, the arithmetic control module 21 stores and accumulates measurement results of the prism 15 as a point cloud in the storage module 22 one after another.

(Step 06) The arithmetic control module 21 calculates the sphere 26 that fits to the accumulated point cloud, and calculates a center of the sphere 26, that is, a lower end of the pole 14, as a virtual measurement point 13a.

(Step 07) After calculating the virtual measurement point 13a, the arithmetic control module 21 calculates an accuracy A of the virtual measurement point 13a. Here, the accuracy A of the virtual measurement point 13a is a value indicating how much the calculated virtual measurement point 13a coincides with the actual measurement point 13, that is, the degree of coincidence.

For example, as shown in FIG.3B, the arithmetic control module 21 calculates an accuracy A of the measurement point 13 based on a spread of the measurement results (point cloud) of the prism 15 at four consecutive points on the sphere 26 with the virtual measurement point 13a as its center and the offset length R as its radius. That is, after the target device 3 is installed, the arithmetic control module 21 calculates the accuracy A of the virtual measurement point 13a based on the spread of all point clouds stored in the storage module 22.

In the above method, the arithmetic control module 21 first normalizes the sphere 26 to a reference sphere 27 as shown in FIG.4. The reference sphere 27 is normalized with an offset length R = 1, is centered at the virtual measurement point 13a, and has a radius of 1. That is, the arithmetic control module 21 converts the three-dimensional coordinates of the point cloud obtained by measuring the prism 15 and located on a surface of the sphere 26 into a point cloud 28 located on a surface of the reference sphere 27 with the virtual measurement point 13a as a center.

Next, the arithmetic control module 21 calculates an area S of the smallest curved surface 29 that includes all of the point cloud 28 located on the surface of the reference sphere 27. The curved surface 29 is a curved surface that forms a part of a surface of the reference sphere 27. The storage module 22 stores a reference curved surface 31 for comparison with the area S. The reference curved surface 31 is a curved surface that forms a part of a surface of the reference sphere 27 and has an area B. Here, the area B is a size that allows a desired fitting accuracy to be obtained when the reference sphere 27 is fitted to the point cloud 28.

The accuracy A of the virtual measurement point 13a can be expressed as accuracy A = area S / area B. The arithmetic control module 21 calculates the accuracy A of the virtual measurement point 13a based on the area S of the curved surface 29 and the area B of the reference curved surface 31.

(Step 08) Once the accuracy A of the virtual measurement point 13a has been calculated, the arithmetic control module 21 judges whether the accuracy A of the virtual measurement point 13a satisfies a predetermined threshold, for example, whether the accuracy is equal to or greater than 1. That is, the arithmetic control module 21 judges whether the area S is equal to or greater than the area B. When the accuracy is equal to or greater than 1, it can be judged that the reference sphere 27 has been fitted to the point cloud 28 with the desired fitting accuracy.

When it is judged that the accuracy A is less than 1, i.e., a size of the area S is smaller than the area B and does not satisfy the threshold, the target device 3 is swung more greatly so as to increase the area S, and the processing of Step 05 to Step 08 is executed again. That is, every time a measurement of the prism 15 is performed, the fitting of the sphere 26 is executed for each measurement result, and the calculation of the virtual measurement point 13a and the fitting of the sphere 26 are repeated until the accuracy becomes 1 or more.

An alarm may be used to notify the operator whether the accuracy A has satisfied a threshold. For example, a sound may be made lower as the accuracy A deviates from 1 and higher as the accuracy A approaches 1, or the sound may be generated intermittently, with the intervals between the sounds increasing as the accuracy A deviates from 1 and narrowing as the accuracy A approaches 1. Alternatively, a light may be flashed, with a frequency of the flashing increasing as the accuracy A deviates from 1 and the frequency of the flashing decreasing as the accuracy A approaches 1, or a color of the light may be changed when the accuracy A reaches 1.

Further, as an alarm, a value of area S/area B may be displayed as a percentage on the display module 23, and may become 100% when area S/area B ≤ 1. Further, as an alarm, when the accuracy A satisfies a threshold, a process may simply proceed to the next step, or the measurement result may be displayed on the display module 23. It goes without saying that various actions indicating a measurement completion, such as sound, light, display, etc., may be combined.

(Step 09) When it is judged that the accuracy A is 1 or more, that is, the size of the area S is equal to or larger than the area B and satisfies the threshold, the arithmetic control module 21 judges that the virtual measurement point 13a coincides or approximately coincides with the measurement point 13, and performs correction for the measurement point 13.

Here, as shown in FIG.5, a measurement position M measured as a center of the prism 15 by the surveying instrument 2 does not necessarily coincide with the actual center position (optical center) M' of the prism 15. For example, when the apparent direction of the prism 15 changes, an incident position of the distance measuring light 11 on the prism 15 also changes, and therefore a deviation (measurement error) occurs between a reflection position of the distance measuring light 11 within the prism 15, i.e., the measurement position M, and the center position M' of the prism 15.

A machine center of the surveying instrument 2 installed at a reference point is denoted as O, a measurement position of the prism 15 measured by the surveying instrument 2 is denoted as M, a position of an actual center (optical center) of the prism 15 is denoted as M', and the calculated virtual measurement point 13a, i.e., a position of a tip (lower end) of the pole 14 is denoted as P. In this case, a directional vector connecting the machine center O and the measurement position M is an O-M vector 32, a directional vector connecting the measurement position M and the measurement point P is a M-P vector 33, and a directional vector connecting the measurement position M and the prism center M' is a M-M' vector 34. It is to be noted that, the three-dimensional coordinates of the reference point are known, and a height of the surveying instrument 2, i.e., a height of the machine center O, is also known, so the three-dimensional coordinate of the machine center O is also known. Further, a tilt of the O-M vector 32 can be calculated based on the three-dimensional coordinates of the machine center O and the measurement position M, and the M-P vector 33 can be calculated based on the three-dimensional coordinates of the measurement position M and the measurement point P.

In this case, when an angle between a plane that is orthogonal to the M-P vector 33 and passes through the measurement position M, and the O-M vector 32 is defined as φ, and an angle between the O-M vector 32 and the M-P vector 33 is defined as θ, the angle φ can be calculated as φ = 90° - θ.

The arithmetic control module 21 calculates a distance (measurement error) between the measurement position M and the prism center M', that is, the measurement error Δe in a direction of the M-P vector 33 based on the angle φ. As a method for calculating Δe, for example, the method for calculating the measurement error shown in Patent Document 1 can be used.

When there is a difference in height between the surveying instrument 2 and the prism 15, which has a structure in which rotation in an axial direction of the pole 14 is fixed, the measurement error Δe is uniquely determined by the angle φ, a size of the prism 15, a refractive index of the prism 15, a tilt angle with respect to an incident surface of the prism 15, and a horizontal distance between the vertex of each retroreflective prism 15a to 15n and the optical center M' of the prism 15.

On the other hand, parameters other than the angle φ can be obtained from specifications of the prism 15 used and can be substituted, so the measurement error Δe of the prism 15 can be expressed as a function of only the angle φ, i.e., Δe = e(φ).

The measurement error Δe can be divided into a measurement error Δd in a horizontal direction and a measurement error Δh in a vertical direction. Here, it is known that the measurement error Δh is approximately proportional to a magnitude of the angle φ, and the measurement error Δh can be approximated by a linear function of the angle φ. It is also known that the measurement error Δd is approximately a quadratic function of the angle φ, and the measurement error Δd can be approximated by a quadratic function of the angle φ.

Further, Δd and Δh depend on the specifications of the prism 15, such as the size and refractive index, a tilt angle of the incident surface of the prism 15 with respect to an optical axis of the distance measuring light, and the angle φ. Therefore, by calculating in advance approximate formulas for the measurement errors Δd and Δh based on the specifications of the prism 15 and storing them in the storage module 22, the measurement errors Δd and Δh can be easily calculated based on the approximate formulas. The arithmetic control module 21 calculates the measurement errors Δd and Δh based on the approximate formulas, and calculates the measurement error Δe based on the measurement errors Δd and Δh.

Once the measurement error Δe is calculated, the arithmetic control module 21 corrects the measurement results (three-dimensional coordinates) by the measurement error Δe in a direction of the M-P vector 33 with respect to the measurement results of all of the point clouds 28 stored and accumulated in the storage module 22, i.e., with respect to all measurement positions M, and updates the three-dimensional coordinates of the measurement positions M. The updated measurement positions Mare saved in the storage module 22 as the three-dimensional coordinates of the optical center M'. It is to be noted that, the three-dimensional coordinates of the measurement positions M are not overwritten by the three-dimensional coordinates of the optical center M'. That is, the storage module 22 stores the measured three-dimensional coordinates of the measurement positions M and the corrected and updated three-dimensional coordinates of the optical center M', respectively.

(Step 10) The arithmetic control module 21 calculates the sphere 26 that fits to each corrected measurement position M, i.e., each optical center M', and recalculates a center of the sphere 26 as the three-dimensional coordinate of the virtual measurement point 13a. The calculated three-dimensional coordinate of the virtual measurement point 13a is stored in the storage module 22 as the measurement point 13.

The calculated measurement point 13 is calculated in the same manner as the virtual measurement point 13a in Step 06. However, since the accuracy A is judged to satisfy the threshold in Step 08, the three-dimensional coordinates of the center of the recalculated sphere 26 can be regarded as the three-dimensional coordinates of the measurement point 13.

(Step 11) When the measurement of the measurement point 13 is completed, the arithmetic control module 21 performs a measurement completion operation. The measurement completion operation may, for example, notify the operator of a measurement completion via an audible alarm or an optical alarm. The above-mentioned alarms may be emitted from the surveying instrument 2 or from an alarm notification mechanism provided on the target device 3.

When there are other measurement points to be measured based on the alarm notification, the operator repeats the processing of Step 02 to Step 11. When there are no other measurement points to be measured, the measurement processing ends.

Further, when the recalculation of the center of the sphere 26 is performed immediately and in a short time after determining whether the accuracy A satisfies the threshold in Step 08, the notification of measurement completion in Step 11 may be omitted.

As described above, in the first embodiment, while the surveying instrument 2 is tracking and measuring the prism 15, the three-dimensional coordinates of the measurement point 13 can be calculated simply by aligning the lower end of the pole 14 with the measurement point 13 and swinging the target device 3 so as to form a two-dimensional spread.

Therefore, it is not necessary to level the target device 3 such that the prism 15 is positioned vertically above the measurement point 13, thereby shortening the work time. Further, it is possible to measure the measurement point 13 where the target device 3 cannot be installed vertically, such as on a wall or in a corner of a room, thereby improving work efficiency.

Further, in the first embodiment, the arithmetic control module 21 automatically judges whether the target device 3 is installed at the measurement point 13 based on whether the sphere 26 that fits at least three points measured consecutively exists or whether the centers of the spheres 26 converge.

Therefore, there is no need to notify the surveying instrument 2 of a completion of installation every time the target device 3 is installed at the measurement point 13, so the work time can be shortened and improved.

When the sphere 26 is fitted to three points, two three-dimensional coordinates of the center of the sphere 26, i.e., the measurement point 13 where the target device 3 is installed, can be obtained. On the other hand, when measuring a floor, for example, the top and bottom between the prism 15 and the lower end of the pole 14 are clear, the three-dimensional coordinates of the measurement point 13 can be uniquely determined.

Further, in the first embodiment, it is possible to calculate the accuracy indicating what degree the calculated virtual measurement point 13a coincides with the actual measurement point 13, and only calculation results where the accuracy satisfies the threshold (is 1 or greater) are adopted, thereby enabling highly precise measurements of the measurement point 13.

Further, in the first embodiment, a measurement error Δe, which is an amount of deviation between the measurement position M measured by the surveying instrument 2 and the optical center M' of the prism 15, is calculated based on the specifications of the prism 15 and the angle φ between a plane orthogonal to the M-P vector 33, and the O-M vector 32, and the measurement result (measurement position M) is corrected based on the measurement error Δe.

Therefore, the deviation between the measurement position due to the apparent direction of the prism 15 as seen from the surveying instrument 2 and the optical center of the prism 15 can be corrected, and a calculation accuracy of the center of the sphere 26, i.e., the measurement point 13, can be further improved.

Further, in the first embodiment, when a start command is input, measuring and tracking are continuously performed even when the target device 3 is moving or is installed. On the other hand, it is also possible to perform only tracking of the prism 15 when the target device 3 is moving, and to measure the prism 15 after the target device 3 is installed.

Further, in the first embodiment, it is judged whether the target device 3 is moving or has been installed at the measurement point 13 based on whether the sphere 26 that fits to a point cloud of at least three consecutive points exists, or whether the center of the sphere 26 that is sequentially fitted to the three points converges to a predetermined threshold or less each time the prism 15 is measured.

On the other hand, while tracking the prism 15, the surveying instrument 2 measures the prism 15 at predetermined time intervals, for example every 2 seconds, and each time the arithmetic control module 21 measures the prism 15, the arithmetic control module 21 calculates the center of the sphere 26 that fits to at least three measurement results of the prism 15 consecutively measured as the virtual measurement point 13a, and when the accuracy A of the virtual measurement point 13a satisfies a preset threshold, it may be judged that the target device 3 has been installed at the measurement point 13.

Alternatively, while tracking the prism 15, the surveying instrument 2 measures the prism 15 at predetermined time intervals, and each time the arithmetic control module 21 measures the prism 15, the arithmetic control module 21 calculates the center of the sphere 26 that fits to the measurement result from a predetermined time ago or a predetermined number of times ago (for example, 5 seconds ago or 5 times ago) as the virtual measurement point 13a, and when the accuracy A of the virtual measurement point 13a satisfies a preset threshold, it is judged that the target device 3 has been installed at the measurement point 13, and the arithmetic control module 21 may calculate the center of the sphere 26 that fits to the latest measurement result as the measurement point 13.

In either case, simply by installing the target device 3 at the measurement point 13, measurement of the measurement point 13 is performed automatically, so after installing the target device 3, there is no need to instruct the surveying instrument 2 to start measurement, which improves workability.

It is to be noted that, once it is judged that the target device 3 has been installed at the measurement point 13, the measurement of the measurement point 13 may be started after a predetermined time has elapsed. That is, after the predetermined time has elapsed, the arithmetic control module 21 may perform the processes of Step 05 to Step 11.

Further, the calculation of the measurement error Δe in the first embodiment and the correction of the measurement position M using the measurement error Δe can be applied to other embodiments as well. For example, when the target device 3 is leveled in a vertical position, the M-P vector 33 becomes a vertical vector, which eliminates the need for calculation, and therefore the measurement error Δe can be easily calculated.

Next, a description will be given on a second embodiment of the present invention by referring to a flowchart of FIG.7.

In FIG.7, Step 21 to Step 26 are the same as Step 01 to Step 06 in FIG.6 of the first embodiment, Step 27 and Step 28 are the same as Step 09 and Step 10, and Step 29 to Step 31 are the same as Step 07, Step 08 and Step 11.

That is, a timing of correcting the measurement results of the prism 15 (see FIG.1) and a timing of recalculating the center of the sphere 26 (see FIG.3) are different from those in the first embodiment.

In the second embodiment, the arithmetic control module 21 (see FIG.2) calculates the sphere 26 that fits to the accumulated point cloud 28 (see FIG.4), and corrects the measurement result (measurement position M) of the prism 15 each time the arithmetic control module 21 calculates the center of the sphere 26 as the virtual measurement point 13a (Step 27). Further, the arithmetic control module 21 recalculates the center of the sphere 26 based on the corrected and updated measurement position M, i.e., the optical center M' (Step 28).

After recalculating the center of the sphere 26, the arithmetic control module 21 calculates accuracy A using the calculated center of the sphere 26 as the virtual measurement point 13a (Step 29), and judges whether accuracy A exceeds a predetermined threshold (Step 30). When accuracy A exceeds the predetermined threshold, the arithmetic control module 21 notifies the operator of a measurement completion (Step 31), and ends the measurement. When accuracy A does not exceed the predetermined threshold, Step 25 to Step 30 are executed again.

In the first embodiment, an alarm may be issued after the accuracy A satisfies a predetermined threshold, but in the second embodiment, an alarm may be issued as an action for notifying the measurement completion.

In the second embodiment as well, the three-dimensional coordinates of the measurement point 13 where the pole 14 (see FIG.1) is installed can be calculated by simply swinging the target device 3 (see FIG.1). This eliminates the need to level the target device 3, thereby shortening the work time and improving the work efficiency.

Further, each time the three-dimensional coordinates of the virtual measurement point 13a are calculated, all measurement results (measurement position M) are corrected, and the virtual measurement point 13a is recalculated based on the corrected measurement position, thereby further improving the precision (accuracy) of the virtual measurement point 13a.

Further, whether the target device 3 has been installed at the measurement point 13 is automatically judged based on whether the center of the sphere 26 converges, so there is no need to input the start and end of measurement for each measurement point 13, thereby shortening and improving work time.

Further, since an amount of deviation between the measurement position of the prism 15 and the optical center of the prism 15 can be calculated as a measurement error Δe, even if the target device 3 is tilted and the measurement position of the prism 15 is deviated from the optical center of the prism 15, the three-dimensional coordinates of the optical center of the prism 15 can be obtained, and the measurement accuracy of the measurement point 13 can be further improved.

Next, in FIG.8, a description will be given on a third embodiment of the present invention. In FIG.8, the same components as shown in FIG.1 are referred by the same symbols, and a description thereof will be omitted.

In the third embodiment, a target device 3 has a tilt sensor 35 provided midway on a pole 14. The tilt sensor 35 is an IMU using, for example, an acceleration sensor or a gyro sensor, and is capable of detecting an attitude of the pole 14, i.e., a tilt angle and a tilt direction of the pole 14. Further, the target device 3 has a communication unit (not shown), and is capable of transmitting the tilt angle and the tilt direction detected by the tilt sensor 35 to a surveying instrument 2.

The surveying instrument 2 (arithmetic control module 21) calculates an O-M vector 32 and a M-P vector 33 in the same manner as in the first and second embodiments, based on measurement results of a prism 15 and the tilt angle and the tilt direction of the pole 14 received from the target device 3, and calculates an angle φ between a plane that is orthogonal to the M-P vector 33 and passes through the measurement position M, and the O-M vector 32. Further, the arithmetic control module 21 calculates the measurement error Δe between the measurement position M of the prism 15 measured by the surveying instrument 2 and the optical center M' of the prism 15, based on the angle φ.

The arithmetic control module 21 calculates the three-dimensional coordinates of the optical center M', which is displaced from the measurement position M by Δe along the tilt direction of the pole 14, i.e., along the M-P vector 33.

Further, the arithmetic control module 21 measures the three-dimensional coordinates of the measurement point 13 where the target device 3 is installed based on the three-dimensional coordinates of the optical center M', the known distance from the optical center of the prism 15 to the lower end of the pole 14, and the tilt angle and tilt direction of the pole 14 received from the target device 3.

In the third embodiment as well, the amount of deviation between the measurement position M and the optical center M' can be calculated as a measurement error Δe based on the measurement result of the prism 15 and the tilt angle and tilt direction of the pole 14. Therefore, even if the target device 3 is tilted and the measurement position M of the prism 15 is misaligned from the optical center M' of the prism 15, the three-dimensional coordinates of the optical center of the prism 15 can be obtained, and the measurement accuracy of the measurement point 13 can be improved.

Further, since it is not necessary to set the target device 3 in a vertical position every time the target device 3 is installed at the measurement point 13, the measurement time can be reduced and workability can be improved.

In the third embodiment, the tilt sensor 35 is provided on the target device 3, and the measurement error Δe is calculated based on the measurement results of the prism 15 and the detection results of the tilt sensor 35, i.e., the tilt angle and tilt direction of the pole 14. On the other hand, if the attitude of the pole 14, i.e., the tilt angle and tilt direction, can be detected or calculated using a device other than the tilt sensor 35, the measurement error Δe, which is the amount of deviation between the measurement position M of the prism 15 and the optical center M' of the prism 15 in the present invention, can be calculated, and the measurement results of the prism 15 can be corrected.

### REFERENCE SIGNS LIST

- 1: Surveying system
- 2: Surveying instrument
- 3: Target device
- 8: Distance measuring module
- 9: Tracking module
- 11: Distance measuring light
- 12: Tracking light
- 13: Measurement point
- 14: Pole
- 15: Prism
- 21: Arithmetic control module
- 22: Storage module
- 26: Sphere
- 28: Point cloud
- 32: O-M vector
- 33: M-P vector
- 35: Tilt sensor

## Claims

1. A surveying system comprising: a target device having a pole and a target of which distance from a lower end of said pole is known and a surveying instrument capable of measuring said target, wherein the lower end of said pole is aligned with a predetermined measurement point, said surveying instrument is configured to calculate an O-M vector connecting a machine center of said surveying instrument and a measurement position of said target, and a M-P vector connecting said measurement position and said measurement point, to calculate an angle φ between a plane orthogonal to said M-P vector and passing through said measurement position, and said O-M vector, to calculate a measurement error between said measurement position and an optical center of said target based on the angle φ, to correct said measurement position based on said measurement error, and to calculate three-dimensional coordinates of said measurement point based on the corrected measurement position.

2. The surveying system according to claim 1, wherein said target device is configured such that said pole is swung while a lower end of said pole is aligned with a predetermined measurement point, said surveying instrument is configured to measure said target at least at three points, to calculate three-dimensional coordinates of a virtual measurement point based on the measurement position of each target, and to calculate said M-P vector based on the measurement position of said target and said virtual measurement point.

3. The surveying system according to claim 1, wherein said target device further has a tilt sensor, and said surveying instrument is configured to calculate said M-P vector based on the measurement position, and an attitude of said pole detected by said tilt sensor.

4. The surveying system according to claim 2, wherein said surveying instrument is configured to calculate a degree of coincidence between said measurement points and said virtual measurement points as an accuracy, and when said accuracy satisfies a preset threshold, to correct the measurement positions of each target, to recalculate said virtual measurement points as measurement points based on the corrected measurement positions, and to perform a measurement completion operation.

5. The surveying system according to claim 2, wherein said surveying instrument is configured to correct all measurement positions of said target each time said virtual measurement point is calculated, to recalculate said virtual measurement point based on the corrected measurement positions, to calculate the degree of coincidence between said measurement points and said virtual measurement point as accuracy, and when said accuracy satisfies a preset threshold, to regard said virtual measurement point as a measurement point and to perform a measurement completion operation.

6. The surveying system according to claims 4 or 5, wherein said surveying instrument is configured to calculate a center of a sphere that has a distance from a lower end of said pole to said target as a radius, and fits to each measurement position as said measurement point, to calculate a reference sphere normalized with the radius of said sphere as 1, to calculate an area of the smallest curved surface including all the point clouds on a surface of said reference sphere, and to calculate said accuracy based on a comparison between said curved surface and a preset reference curved surface.

7. The surveying system according to claim 6, wherein said surveying instrument further has a tracking function, and said surveying instrument is configured to measure a target while tracking said target.

8. The surveying system according to claim 7, wherein said surveying instrument is configured to sequentially calculate spheres that fit at least three measurement positions of said target consecutively measured each time said target is measured, and to judge whether said target device is installed at said measurement point based on whether a distance between centers of the spheres converges within a preset threshold range.

9. A surveying method comprising: a step of calculating an O-M vector connecting a machine center of a surveying instrument and a measurement position of a target provided at an upper end of a pole, and a M-P vector connecting said measurement position and a measurement point, while aligning a lower end of said pole with a predetermined measurement point, a step of calculating an angle φ between a plane orthogonal to said M-P vector and passing through said measurement position and said O-M vector, a step of calculating a measurement error between said measurement position and an optical center of said target based on the angle φ, a step of correcting said measurement position based on said measurement error, and a step of calculating three-dimensional coordinates of said measurement point based on the corrected measurement position.

10. The surveying method according to claim 9, further comprising: a step of measuring said target at least at three points by swinging said pole while aligning the lower end of the pole with a predetermined measurement point, a step of calculating three-dimensional coordinates of a virtual measurement point based on measurement positions of each target, and a step of calculating said M-P vector based on the measurement positions of said target, and said virtual measurement point.

11. The surveying method according to claim 9, further comprising: a step of receiving an attitude of said pole from a tilt sensor provided on said pole, and a step of calculating said M-P vector based on the received attitude of said pole.

12. A surveying program that causes said surveying instrument to perform following processes: while a lower end of said pole is aligned with a predetermined measurement point, a process for calculating an O-M vector connecting a machine center of a surveying instrument and a measurement position of a target provided at an upper end of said pole, and a M-P vector connecting said measurement position and said measurement point, a process for calculating an angle φ between a plane orthogonal to said M-P vector and passing through said measurement position, and said O-M vector, a process for calculating a measurement error between said measurement position and an optical center of said target based on the angle φ, a process for correcting said measurement position based on said measurement error, and a process for calculating three-dimensional coordinates of said measurement point based on the corrected measurement position.
